# FASCICULE DE BREVET EUROPEEN

(11) **EP 0 930 154 B1**
(45) Date de publication et mention de la délivrance du brevet: **12.12.2007**
(21) Numéro de dépôt: 98204470.3
(22) Date de dépôt: 24.12.1998
(51) Int. Cl.: B32B 7/06, B29C 47/00, B29C 53/10

(54) **Film tubulaire aplati et procédé de fabrication d'un tel film**
Flachgelegte Schlauchfolienbahn und Verfahren zur Herstellung eines solchen Filmes
Flattened tubular film and a method for making such a film

(30) Priorité: 16.01.1998 BE 9800032
(43) Date de publication de la demande: 21.07.1999
(73) Titulaire: SOLVAY INDUSTRIAL FOILS MANAGEMENT AND RESEARCH, 1050 Bruxelles (BE)
(72) Inventeur: van der Pouw, Nicolaas C., 1602 XW Enkhuizen (NL)
(74) Mandataire: Patentanwälte Zellentin & Partner

(56) Documents cités:
- EP-A- 0 519 251
- DE-A- 2 210 445
- DE-A- 3 919 360
- US-A- 3 684 614
- US-A- 4 184 904

## Description

La présente invention concerne un procédé pour la production d'un film tubulaire aplati.

La réalisation de poches ou de sacs en matière plastique à usage médical s'effectue classiquement par extrusion de la matière plastique à l'état fondu à travers une filière annulaire afin de former une film cylindrique, soufflage au moyen d'un gaz sous pression et aplatissement de ce film sans soudage ni adhésivation de ses faces internes. Les poches elles-mêmes sont réalisées ultérieurement à partir de ce film par découpage, insertion des différents accessoires (tuyaux de connexions, ...) entre les deux parois et soudage de celles-ci, le plus souvent à leurs extrémités ou leur périphérie.

La plupart des matières plastiques utilisées dans cette application ont le désavantage de créer une adhérence (blocking) entre les deux faces internes du film aplati. Cette adhérence a pour conséquence, notamment, de rendre plus difficile la séparation ultérieure des deux faces du film, afin d'introduire entre elles les différents accessoires. La cadence de production de tels articles en est réduite, ce qui conduit à un désavantage économique certain.

Une deuxième conséquence de cette adhérence est que les deux faces internes sont en contact mutuel quasi continu sur toute la surface du film aplati. Lors de l'étape de soudage ultérieur des deux faces internes entre elles, il n'y a donc aucun volume libre, entre ces deux faces et le long de la zone soudée pour permettre la formation d'un bourrelet de soudure, garant d'une soudure de bonne qualité. Ce phénomène conduit donc à des articles soudés dont la résistance des soudures peut être non uniforme, voire éventuellement déficiente.

Une tentative de solution à ce problème d'adhérence a été, par exemple, de créer un matage d'au moins une des faces internes du film tubulaire aplati. Par exemple, la demande de brevet EP-A-0 445 793 décrit la création d'un matage d'un film tubulaire sur une partie de sa circonférence au moyen d'un conditionnement en température particulier du noyau de la filière annulaire utilisée.

Ce procédé est cependant coûteux et complexe à mettre en oeuvre, et conduit à des articles dont la transparence globale est réduite, ce qui est à éviter dans le cas d'applications médicales.

DE3919360 décrit un sac à usage médical, en particulier une poche à sang ou pour fluides médicaux, obtenu par aplatissement d'un film coextrudé tubulaire en matière plastique, préférablement en PvC. Le procédé de fabrication du dit film implique l'extrusion d'une gaine cylindrique, suivi de la création d'une succession de dépressions et élévations sur l'une des faces du tube; un gaz sous pression peut éventuellement être introduit dans la dite gaine. Enfin, la gaine tubulaire est aplatie, les dépressions et élévations créées sur l'une des faces formant des cavités cellulaires qui évitent que les deux faces collent l'une à l'autre sur toute l'étendue de leur surface respective. Les cavités ainsi créées contiennent soit l'oxygène ambiant, ou bien un oxygène stérilisé ou encore un gaz inerte. Un soudage des deux faces peut éventuellement intervenir.

La présente invention a dès lors pour objet l'obtention d'un film tubulaire aplati dont la séparation ultérieure des deux faces internes est aisée, dont le soudage des deux faces internes entre elles conduit à des soudures de bonne qualité, et dont les parois ont une transparence élevée.

Dès lors, l'invention concerne l'obtention d'un film tubulaire aplati en matière thermoplastique, dont les deux faces internes ne sont pas soudées ni adhésivées, qui se caractérise en ce que lesdites faces internes ne sont en contact mutuel que sur une partie de leur surface, formant ainsi une pluralité de cellules de forme déterminée et substantiellement hermétiques contenant un gaz.

Dans le cadre de la présente invention, on entend par film tubulaire tout corps creux de longueur indéfinie dont l'épaisseur moyenne de la paroi est nettement inférieure à un demi-diamètre de sa section transversale. L'épaisseur de la paroi est généralement comprise entre 0,01 et 2 mm, le plus souvent entre 0,1 et 0,5 mm. La largeur du film aplati est en général comprise entre 10 et 1000 mm.

Le film tubulaire peut aussi bien être multicouche que monocouche, orienté ou non.

Par film tubulaire aplati, on entend désigner tout film tubulaire dont la paroi a été déformée de telle façon à rendre parallèles et à amener en contact mutuel, sur une partie de leur face interne, deux demi-circonférences du film tubulaire. Cette mise en contact se réalise dans des conditions, notamment de température et de pression, telles que les deux faces internes du film restent distinctes et séparables ultérieurement, c'est-à-dire qu'elles ne sont pas mutuellement soudées ni adhésivées, c'est-à-dire sans collage intentionnel. Cette absence de soudage ou d'adhésion intentionnelle, notamment, distingue les films conformes à l'invention des films à bulles utilisés principalement dans l'emballage pour la protection d'articles fragiles.

La mise en contact mutuel desdites faces internes du film tubulaire est partielle, c'est-à-dire qu'elles ne sont en contact mutuel que sur une partie de leur surface, les endroits où il n'y a pas de contact mutuel formant ainsi une pluralité des cellules décrites ci-après.

Pour la suite, on considérera donc que le film tubulaire aplati conforme à l'invention comprend deux parois, dont la largeur correspond approximativement à une demi-circonférence du film tubulaire et une interface entre les deux faces internes de ces parois. Lesdites parois ne sont en contact mutuel que dans certaines régions de l'interface, les autres régions étant occupées par les cellules de gaz.

Pour la clarté de ce qui suit, on supposera que le film tubulaire aplati possède une interface essentiellement plane, mais il est bien évident qu'il peut se présenter sous toute autre configuration, par exemple enroulé ou plié.

Par matière thermoplastique, on désigne tout polymère thermoplastique, y compris les élastomères thermoplastiques, ainsi que leurs mélanges. On désigne par le terme "polymère" aussi bien les homopolymères que les copolymères (binaires ou ternaires notamment), par exemple les copolymères à distribution aléatoire, les copolymères séquencés, les copolymères à blocs, les copolymères greffés, etc.

De préférence, la matière thermoplastique est constituée essentiellement d'un ou plusieurs polymères choisis parmi les polymères plastifiés de chlorure de vinyle, les polyoléfines, les polyesters et les polyamides.

Par polymère plastifié de chlorure de vinyle, on entend désigner tout homopolymère de chlorure de vinyle, tout copolymère de chlorure de vinyle, ainsi que les mélanges de ces homo- et/ou copolymères. Le polymère est dit plastifié lorsqu'il comprend une quantité substantielle de plastifiant, en particulier au moins 20 parts de plastifiant pour 100 parts de polymère (en poids). Tout type de plastifiant peut être employé, la quantité présente étant évidemment adaptée en conséquence. Par exemple, les phtalates, citrates, trimellitates et phosphates d'alkyle sont largement employés. Le plastifiant utilisé peut aussi être polymérique, ce qui présente l'avantage de réduire son exsudation.

Par polyoléfine, on entend désigner tout homopolymère d'oléfine, tout copolymère contenant au moins deux oléfines différentes et tout copolymère comprenant au moins 50 % en poids d'unités dérivées d'oléfines. Dans ce dernier cas, le comonomère peut être de toute autre nature. Il peut s'agir notamment d'un ester vinylique, par exemple de l'acétate de vinyle.

Dans le cas d'une polyoléfine, cette dernière peut avantageusement être mélangée à au moins un élastomère, par exemple de type copolymère à trois blocs styrène - éthylène butylène - styrène (SEBS) ou styrène - éthylène propylène - styrène (SEPS). La teneur du mélange en élastomère(s) peut dans ce cas atteindre 80 % en poids.

Par polyester, on entend désigner tout homopolymère ou copolymère thermoplastique comprenant des motifs répétitifs reliés par des fonctions de type ester intégrées dans le squelette polymérique.

Par polyamide, on entend désigner tout homopolymère ou copolymère thermoplastique comprenant des motifs répétitifs reliés par des fonctions de type amide intégrées dans le squelette polymérique.

De manière davantage préférée, la matière thermoplastique est essentiellement constituée d'un polymère plastifié de chlorure de vinyle (PVC).

Des résultats intéressants ont également été obtenus avec une matière thermoplastique essentiellement constituée d'un copolymère statistique d'éthylène et d'acétate de vinyle (EVA).

A la matière thermoplastique peuvent être ajoutés un ou plusieurs additifs classiques, polymériques ou non, tels des charges minérales ou organiques, des matières de renforcement, des plastifiants, des stabilisants, lubrifiants, etc.

Le gaz remplissant les cellules localisées entre les deux faces internes du film aplati peut être de toute nature ou être un mélange de différents gaz. Il peut s'agir notamment d'air, d'azote ou de dioxyde de carbone. De préférence, et notamment pour des raisons économiques, le gaz est essentiellement de l'air.

Afin de prévenir toute contamination, le gaz est de préférence exempt de corps étrangers, comme des poussières ou des bactéries.

Dans le cadre de la présente invention, les cellules de gaz de forme déterminée sont localisées entre les deux faces internes du film aplati. Cela signifie que les deux faces du film ne sont pas en contact mutuel sur l'entièreté de leur surface et que les zones où elles ne sont pas en contact contiennent donc un gaz de façon à former une pluralité de cellules. Ces cellules sont macroscopiques et, grâce à l'adhérence ("blocking") entre les deux faces du film à la périphérie des cellules, sont essentiellement hermétiques et de géométrie figée.

Dans la direction perpendiculaire au film aplati, il est avantageux que l'épaisseur des cellules de gaz soit faible par rapport à l'épaisseur de la paroi du film. De préférence, l'épaisseur des cellules n'est pas supérieure à 50 % de l'épaisseur de la paroi du film. De manière davantage préférée, l'épaisseur des cellules n'est pas supérieure à 25 % de l'épaisseur de la paroi du film.

Dans le plan de l'interface entre les deux parois du film, les cellules de gaz sont de forme déterminée, c'est-à-dire de forme contrôlée et non aléatoire. La forme peut être régulière ou irrégulière. Cependant, il s'est avéré préférable que les cellules de gaz soient disposées entre les faces internes du film aplati selon un motif régulier. Dans ce cas, il est préférable également qu'au moins une des dimensions caractéristiques des cellules dans ce plan soit nettement inférieure à la largeur du film aplati.

Le motif régulier peut par exemple être un réseau de formes géométriques identiques ou mélangées comme, de façon non limitative, des disques, ovales, rectangles, losanges, carrés, ... .

De façon avantageuse, le motif est tel que le rapport entre la somme des surfaces occupées par les cellules de gaz et la surface totale de l'interface ne soit pas inférieur à 0,25. De façon encore plus avantageuse ce rapport n'est pas inférieur à 0,50.

De même, il est préférable que ce rapport ne soit pas supérieur à 0,98. De façon encore plus préférée, il n'est pas supérieur à 0,95.

Une configuration particulièrement utile dans le cas d'un motif régulier s'est révélé être telle que tout plan perpendiculaire à l'axe longitudinal dudit film aplati rencontre au moins une cellule de gaz. Un motif ayant donné de très bons résultats est constitué de cellules de forme carrée dont une des diagonales est approximativement parallèle à l'axe longitudinal du film aplati et dont la longueur du côté est supérieure à la distance séparant deux cellules voisines.

Le film tubulaire aplati conforme à l'invention peut être utilisé dans de multiples domaines. Cependant, vu ses propriétés, c'est dans des applications à caractère médical que les applications préférées seront réalisées.

Dès lors, l'invention concerne également l'utilisation d'au moins un film tubulaire aplati tel que décrit ci-dessus pour la fabrication d'un article à usage médical.

Par usage médical, on entend toutes les applications ayant un rapport avec l'art de conserver ou de rétablir la santé humaine ou animale. Ceci inclut notamment la chirurgie, la pharmacie et la dentisterie.

Un autre objet de l'invention est constitué par un article à usage médical comprenant au moins un film tubulaire aplati tel que décrit ci-dessus.

L'article concerné par la présente invention peut être de toute nature. Il peut s'agir, notamment, d'une poche, d'un pansement, d'une alaise, ... .

De préférence, il s'agit d'une poche.

Ladite poche peut être destinée à contenir, notamment, du sang, du sérum, un soluté, tissu ou fluide biologiques ou une solution nutritive.

Une telle poche est fabriquée à partir d'un film tubulaire aplati conforme à l'invention, étant données, d'une part, la facilité avec laquelle les parois dudit film tubulaire aplati peuvent être séparées pour permettre l'introduction des différents accessoires de la poche, et, d'autre part, l'assurance accrue d'une soudure de meilleure résistance.

Dès lors, l'invention concerne un procédé de fabrication d'un film tubulaire aplati tel que décrit ci-dessus, comprenant les étapes de :
(a) extrusion d'une gaine cylindrique en matière thermoplastique,
(b) introduction d'un gaz sous pression à l'intérieur de ladite gaine, avec formation d'un film tubulaire,
(c) aplatissement dudit film tubulaire au moyen d'au moins une paire de cylindres, sans soudage ni adhésivation de ses deux faces internes,
qui se caractérise en ce que la surface d'au moins un des cylindres possède un relief tel que, lors de l'aplatissement, les deux faces internes du film n'entrent en contact mutuel que sur une partie de leur surface, formant ainsi une pluralité de cellules de forme déterminée et substantiellement hermétiques dans lesquelles est emprisonné ledit gaz.

Par gaine, on désigne ici tout corps creux de forme tubulaire et de longueur indéfinie. Les caractéristiques de cette gaine sont identiques à celles, décrites précédemment, du film tubulaire, à l'exception du fait que l'épaisseur moyenne de sa paroi n'est pas nécessairement nettement inférieure à un demi-diamètre de sa section transversale.

L'extrusion de la matière plastique constituant la gaine peut se faire selon tout procédé connu de l'homme du métier. Notamment, les extrudeuses mono-vis ou bi-vis peuvent être employées, de même que la technique de coextrusion.

La tête d'extrusion peut également avoir toute conformation ou orientation adéquates, notamment verticale ou horizontale.

La filière utilisée est une filière à noyau. Elle peut posséder toute géométrie compatible avec la matière plastique utilisée. De préférence, il s'agit d'une filière annulaire.

Le gaz est introduit sous pression à l'intérieur de la gaine, c'est-à-dire entre la filière et la paire de cylindres assurant l'aplatissement du film. Classiquement, le gaz est introduit via le noyau de la filière. Le gaz peut, de préférence, être filtré préalablement.

L'introduction du gaz sous pression à l'intérieur de la gaine conduit en général à une augmentation du diamètre de ladite gaine, avec une diminution correspondante de l'épaisseur de la paroi. Dans le cas où le diamètre de la gaine est figé rapidement après la sortie de la filière, par exemple au moyen d'un calibreur, cette augmentation de diamètre peut cependant être très faible.

Qu'il y ait ou non une augmentation sensible du diamètre de la gaine, on considérera ici que ladite gaine, après introduction du gaz, forme un film tubulaire.

La ou les paires de cylindres réalisant l'aplatissement du film tubulaire sont disposées en aval de la filière, usuellement perpendiculairement à l'axe longitudinal du film tubulaire. La paire de cylindres réalisant la mise en contact des deux faces internes du film tubulaire pince le film dans des conditions, notamment de température et de pression, telles qu'il n'y a ni soudage ni adhésivation des deux faces internes du film. La pression du gaz à l'intérieur de la gaine provoque l'application de la paroi du film dans les creux du relief présent sur la surface d'au moins un de ces cylindres. Lors du passage des deux portions diamétralement opposées de la paroi du film dans l'entrefer desdits cylindres, le gaz présent dans les creux ainsi formés sur la face interne du film est emprisonné entre les deux parois, pour y former des cellules de forme déterminée, selon un motif correspondant au motif du relief présent sur la surface du ou des cylindres.

Soulignons que dans le cas où la surface de chaque cylindre possède un certain relief, les motifs de ces reliefs doivent correspondre de façon à former des cellules de gaz fermées.

D'excellents résultats ont été obtenus en utilisant un cylindre dont la surface possède un relief, l'autre cylindre étant lisse dans ce cas.

La surface des cylindres peut être de toute nature compatible avec la matière plastique utilisée. Il peut s'agir, notamment, d'acier, de caoutchouc ou de polyuréthanne.

Notons que le procédé conforme à l'invention peut encore comporter d'autres étapes, précédant, suivant ou intercalées entre les étapes énumérées ci-dessus. Citons notamment les étapes de calibrage, de refroidissement ou d'enroulement du film tubulaire.

Le procédé conforme à l'invention est particulièrement avantageux pour la fabrication d'articles à usage médical.

Dès lors, l'invention concerne également un procédé de fabrication d'un article à usage médical comprenant une étape de fabrication d'un film tubulaire aplati telle que décrite ci-dessus, suivie d'au moins une étape de soudage mutuel des deux parois dudit film tubulaire aplati.

L'étape de soudage peut être réalisée selon toute technique de soudage applicable à la matière plastique utilisée. Il peut s'agir notamment de soudage thermique (apport de calories par un outil chauffant) ou de soudage par haute fréquence ou radiofréquence (excitation électronique par application d'un champ électrique alternatif).

Le soudage mutuel des deux parois est réalisé sur une partie de la surface desdites parois, en fonction du type d'article à fabriquer. Le plus souvent, le soudage est réalisé aux extrémités ou à la périphérie du film tubulaire aplati.

L'étape de soudage peut également être précédée, suivie ou accompagnée par d'autres étapes, de découpe par exemple.

Cette étape de soudage peut aussi être réalisée indifféremment en ligne avec l'appareillage réalisant la fabrication du film tubulaire aplati, ou par la suite, éventuellement après une étape de stockage dudit film, par exemple sous forme de rouleau.

L'article à usage médical fabriqué grâce au procédé conforme à l'invention peut être de toute nature. Il peut s'agir, notamment, d'une poche, d'un pansement, d'une alaise, ... .

De préférence, il s'agit d'une poche.

Ladite poche peut être destinée à contenir, notamment, du sang, du sérum, un soluté, tissu ou fluide biologiques ou une solution nutritive.

Les figures annexées et l'exemple suivant illustrent de façon non limitative un des modes de réalisation préférés d'un film tubulaire aplati conforme à l'invention ainsi qu'un des modes de réalisation préférés d'un procédé de fabrication d'un tel film :

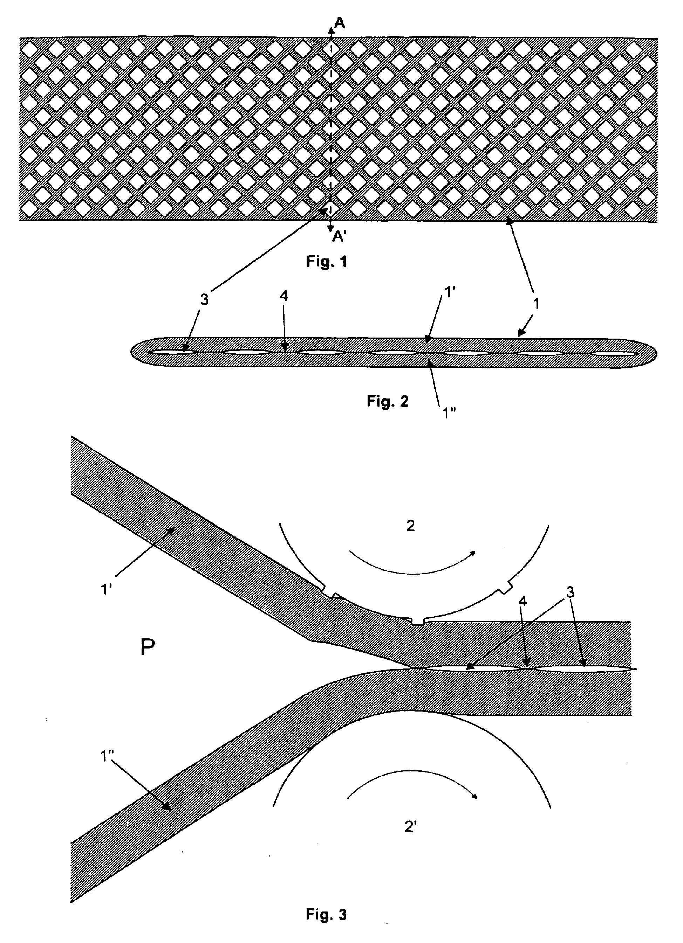

La figure 1 est une vue en élévation d'une portion d'un film tubulaire aplati (1) entre les faces internes duquel sont localisées des cellules d'air (3) de forme carrée. La zone hachurée représente la région de contact mutuel entre les deux parois du film. Les parties claires représentent les cellules d'air.
La figure 2 est un agrandissement d'une coupe verticale suivant le plan AA' de la figure 1, ledit plan étant perpendiculaire à l'axe longitudinal du film tubulaire. On voit les deux parois (1',1'') du film, l'interface (4) entre les faces internes de ces parois et les cellules d'air (3).
   On peut remarquer que, grâce aux caractéristiques géométriques du motif choisi pour la disposition des cellules d'air, tout plan parallèle à AA' rencontre nécessairement au moins une cellule d'air (au minimum 6 dans le cas présent).
La figure 3 est une vue partielle d'un appareillage permettant la fabrication d'un film tubulaire aplati semblable à celui des figures 1 et 2. Elle montre plus particulièrement l'étape d'aplatissement du film.

Un film tubulaire est extrudé au moyen d'une extrudeuse munie d'une filière annulaire (non représentées). De l'air filtré sous pression est introduit par le noyau de la filière à l'intérieur du film tubulaire. Après refroidissement, les parois (1',1'''') du film tubulaire (1) sont aplaties au moyen d'une paire de cylindres (2,2'). La surface d'un des cylindres (2) possède un relief, ici un réseau régulier de creux carrés. La paroi (1') du film tubulaire est appliquée, du moins partiellement, au fond des creux sur la surface du cylindre, grâce à la pression P régnant à l'intérieur du film tubulaire.

Le mouvement d'avancée du film provoque l'emprisonnement de cellules d'air (3) entre les deux parois du film aplati.

### Exemple

Un film tubulaire en PVC comprenant 33 % de plastifiant et d'une épaisseur moyenne de paroi valant 0,35 mm a été aplati au moyen d'une paire de cylindres dont l'un possède une surface en acier possédant un relief constitué de creux carrés de 10 mm de côté et d'une profondeur de 1 mm. Ces creux étaient séparés par une cloison d'une largeur de 2 mm. Le second cylindre possédait une surface lisse en polyuréthanne. Des cellules d'air carrées, d'une épaisseur variant de 0,01 à 0,06 mm ont ainsi été créées entre les deux faces internes de ce film.

Une bobine a ensuite été réalisée par enroulement de 100 m de ce film aplati (largeur : 220 mm) autour d'un mandrin.

Les propriétés d'adhérence mutuelle des deux faces internes du film aplati ont été mesurées suivant la procédure suivante :
- découpe d'un échantillon de 5 cm de large et d'au moins 10 cm de long au centre du film aplati (perpendiculairement à l'axe longitudinal du film), en trois localisations différentes de la bobine : dans la région externe, dans la région intermédiaire et au coeur de la bobine;
- séparation, localisée à une des extrémités de l'échantillon, des bords des deux parois et introduction de chacun de ces bords dans une mâchoire d'une machine de traction;
- poursuite de la séparation des deux parois avec la machine de traction, sous une vitesse de 100 mm/min.;
- mesure de la force nécessaire à cette séparation (en N/m).

Les résultats sont les suivants :

| | |
|---|---|
| * Région externe : | 6,8 N/m |
| * Région intermédiaire : | 6,9 N/m |
| * Région du coeur : | 8,0 N/m |

Un film tubulaire de composition identique, préparé selon la même procédure, hormis que des cellules d'air n'ont pas été introduites entre les faces du film, présente une adhérence de l'ordre de 15 à 20 N/m.

## Revendications

1. Procédé de fabrication d'un film tubulaire aplati comprenant les étapes de :
(a) extrusion d'une gaine cylindrique en matière thermoplastique,
(b) introduction d'un gaz sous pression à l'intérieur de ladite gaine, avec formation d'un film tubulaire,
(c) aplatissement dudit film tubulaire au moyen d'au moins une paire de cylindres (2,2'), sans soudage ni adhésivation de ses deux faces internes,
**caractérisé en ce que** la surface d'au moins un des cylindres (2) possède un relief tel que, lors de l'aplatissement, les deux faces internes du film n'entrent en contact mutuel que sur une partie de leur surface, formant ainsi une pluralité de cellules de forme déterminée et substantiellement hermétiques dans lesquelles est emprisonné ledit gaz.

2. Procédé de fabrication d'un article à usage médical comprenant une étape de fabrication d'un film tubulaire aplati selon la revendication 1 suivie d'au moins une étape de soudage mutuel des deux parois dudit film tubulaire aplati.

3. Procédé selon la revendication 2, dans lequel l'article est une poche.

4. Procédé selon l'une des revendications 1 à 3, dans lequel la matière thermoplastique est essentiellement constituée d'un polymère plastifié de chlorure de vinyle ou d'un copolymère statistique d'éthylène et d'acétate de vinyle.

5. Procédé selon l'une quelconque des revendications précédentes, dans lequel le gaz est essentiellement de l'air.

6. Procédé selon l'une quelconque des revendications précédentes, dans lequel les cellules de gaz sont disposées entre les faces internes du film aplati selon un motif régulier.

7. Procédé selon la revendication 6, dans lequel le motif est tel que tout plan perpendiculaire à l'axe longitudinal dudit film aplati rencontre au moins une cellule de gaz.

8. Procédé selon la revendication 7, dans lequel le motif est constitué de cellules de forme essentiellement carrée dont une des diagonales est approximativement parallèle à l'axe longitudinal du film aplati et dont la longueur du côté est supérieure à la distance séparant deux cellules voisines.

## Claims

1. Process for manufacturing a flattened tubular film, comprising the steps of:
(a) extruding a cylindrical preform made of thermoplastic material,
(b) introducing a pressurized gas into the said preform, with formation of a tubular film,
(c) flattening the said tubular film using at least one pair of cylinders (2,2'), without welding or gluing of its two inner faces,
**characterised in that**
the surface of at least one of the cylinders (2) has a relief such that, during the flattening, the two inner faces of the film come into mutual contact only over a part of their surface, thus forming a plurality of cells of determined shape, substantially hermetic, in which the said gas is imprisoned.

2. Process for manufacturing an article for medical use, comprising a step of manufacturing a flattened tubular film according to Claim 1, followed by at least one step of mutual welding of the two walls of the said flattened tubular film.

3. Process according to Claim 2, in which the article is a bag.

4. Process according to one of Claims 1 to 3, in which the thermoplastic material consists essentially of a plasticized vinyl chloride polymer or a random copolymer of ethylene and vinyl acetate.

5. Process according to anyone of the preceding Claims, in which the gas is essentially air.

6. Process according to anyone of the preceding Claims, in which the gas cells are arranged between the inner faces of the flattened film in a regular pattern.

7. Process according to Claim 6, in which the pattern is such that any plane perpendicular to the longitudinal axis of the said flattened film encounters at least one gas cell.

8. Process according to Claim 7, in which the pattern consists of essentially square-shaped cells in which one of the diagonals is approximately parallel to the longitudinal axis of the flattened film and in which the side length is greater than the distance separating two neighbouring cells.

## Patentansprüche

1. Verfahren zur Herstellung einer flachgelegten Schlauchfolie, das die folgenden Schritte umfasst:
(a) Extrusion einer zylindrischen Hülle aus thermoplastischem Material,
(b) Einleitung eines Gases unter Druck in das Innere der Hülle unter Bildung einer Schlauchfolie,
(c) Flachlegen der Schlauchfolie mittels mindestens eines Zylinderpaares (2, 2') ohne Verschweißen oder Verkleben ihrer beiden Innenseiten,
**dadurch gekennzeichnet, dass**
die Oberfläche mindestens eines der Zylinder (2) eine derartige Struktur aufweist, dass während des Flachlegens die beiden Innenseiten der Folie nur auf einem Teil ihrer Oberfläche in gegenseitigen Kontakt treten, wodurch eine Vielzahl von im Wesentlichen hermetischen Zellen mit festgelegter Form gebildet wird, in denen das Gas eingeschlossen ist.

2. Verfahren zur Herstellung eines Artikels zur medizinischen Verwendung, das einen Schritt der Herstellung einer flachgelegten Schlauchfolie nach Anspruch 1 umfasst, gefolgt von mindestens einem Schritt der gegenseitigen Verschweißung der beiden Wände der flachgelegten Schlauchfolie.

3. Verfahren nach Anspruch 2, wobei der Artikel ein Beutel ist.

4. Verfahren nach einem der Ansprüche 1 bis 3, wobei der thermoplastische Werkstoff im Wesentlichen aus einem plastifizierten Vinylchlorid-Polymer oder einem statistischen Ethylen- und Vinylacetat-Copolymer gebildet ist.

5. Verfahren nach irgendeinem der vorhergehenden Ansprüche, wobei das Gas im Wesentlichen Luft ist.

6. Verfahren nach irgendeinem der vorhergehenden Ansprüche, wobei die Gaszellen zwischen den Innenseiten der flachgelegten Folie nach einem regelmäßigen Muster angeordnet sind.

7. Verfahren nach Anspruch 6, wobei das Muster derart ist, dass jede zur Längsachse der flachgelegten Folie senkrechte Ebene mit mindestens einer Gaszelle in Berührung kommt.

8. Verfahren nach Anspruch 7, wobei das Muster aus Zellen in einer im Wesentlichen viereckigen Form besteht, deren eine Diagonale annähernd parallel zur Längsachse der flachgelegten Folie ist und deren Seitenlänge größer als der Abstand ist, der zwei benachbarte Zellen voneinander trennt.
